Europäisches Patentamt

European Patent Office

Office européen des brevets

(11) Numéro de publication : **0 040 564**
**B1**

(12) # FASCICULE DE BREVET EUROPÉEN

(45) Date de publication du fascicule du brevet :
**26.09.84**

(51) Int. Cl.³ : **C 09 J 5/08**

(21) Numéro de dépôt : **81400769.6**

(22) Date de dépôt : **15.05.81**

(54) **Procédé de collage entre elles de planches de bois à surface brute ou blanchie, de placages tranchés ou déroulés.**

(30) Priorité : **20.05.80 FR 8011259**

(43) Date de publication de la demande :
**25.11.81 Bulletin 81/47**

(45) Mention de la délivrance du brevet :
**26.09.84 Bulletin 84/39**

(84) Etats contractants désignés :
**AT BE CH DE FR GB IT LI LU NL SE**

(56) Documents cités :
**US-A- 3 615 975**

(73) Titulaire : **CENTRE TECHNIQUE DU BOIS**
**10 avenue St Mandé**
**F-75012 Paris (FR)**

(72) Inventeur : **de Leeuw, Jean**
**1 rue Albert Sorel**
**F-75014 Paris (FR)**
Inventeur : **Elbez, Gérard**
**54 rue de Belleplace**
**F-94190 Villeneuve ST Georges (FR)**

(74) Mandataire : **Combe, André et al**
**CABINET BEAU DE LOMENIE 55 rue d'Amsterdam**
**F-75008 Paris (FR)**

## Description

La présente invention concerne un nouveau procédé pour le collage, entre elles, de planches ou de placages de bois.

La réalisation de matériaux industriels par collage, entre elles, de planches de bois est connue ; la technique classique utilisée consiste tout d'abord à soumettre les surfaces de planches à coller à un rabotage de façon à obtenir une surface suffisamment lisse puis à enduire au moins une des surfaces avec une quantité convenable de colle, à presser l'ensemble et à assurer la solidification de la colle. Or, l'opération de rabotage de la surface des planches est une opération relativement onéreuse qui, de plus, « consomme » une certaine épaisseur de bois. La présente invention vise à surmonter cette difficulté en permettant, lors du collage de planches, d'avoir soit à éviter l'opération de rabotage des surfaces à coller, soit à la limiter à un rabotage local appelé blanchiment.

Par ailleurs on sait que la réalisation d'éléments à partir de placages tranchés ou déroulés nécessite lors du collage la mise en œuvre de pression non négligeables ; il est souhaitable, pour éviter une perte d'épaisseur du matériau fini dans la mise en œuvre de cette technologie de réduire la pression de serrage lors de l'opération de collage. C'est là un autre objet de la technique de collage selon la présente invention.

Le procédé de collage selon la présente invention est caractérisé en ce que :

— on enduit au moins une des surfaces en regard, à l'état brut ou blanchi, des planches ou placages à coller d'une colle polymère contenant
    — au moins un agent durcisseur et
    — au moins un agent porogène volatil
— on amène les surfaces en regard en contact avec application de pression éventuelle
— et on chauffe l'ensemble de façon à provoquer une élévation contrôlée de la température et l'expansion jusqu'à un taux de 30 à 100 % ; de la colle polymère par volatilisation de l'agent porogène.

On a déjà utilisé antérieurement des colles ou produits collants à l'état de mousse (par exemple des colles phénoliques ou urée formol ou polyuréthannes), mais le moussage de la colle était réalisé avant l'application sur le bois de ladite colle et était effectué pour diminuer la quantité de colle à employer au mètre carré. Une technique de ce type est décrite, par exemple, dans le brevet US 3 615 975. Mais on a pu constater qu'une telle technique ne conduisait pas à des collages très solides.

On a déjà décrit l'utilisation, comme colles, de certaines résines formophénoliques contenant du chlorure d'aluminium qui, convenablement chauffées, donnent naissance à des joints collants présentant, du fait du dégagement gazeux résultant de la réaction chimique, un aspect moussant.

Mais dans ces techniques connues de collage on ne peut obtenir, par suite d'un contrôle difficile des conditions et des taux de moussage, des collages présentant des propriétés mécaniques acceptables, notamment pour des emplois travaillants. Le procédé selon l'invention permet au contraire, grâce à un contrôle précis du taux de moussage et des conditions de moussage, d'adapter les propriétés mécaniques du joint de collage aux propriétés des bois que l'on veut coller. De plus, dans le procédé selon l'invention l'expansion de la colle polymère ayant lieu « in situ », ladite expansion s'adapte en chaque point aux écarts locaux qui existent entre les surfaces en regard des pièces à coller ; il s'ensuit que, bien que l'expansion de la colle soit homogène dans un « cylindre élémentaire » considéré en chaque point des surfaces des pièces à coller, cette expansion n'est pas la même pour tous ces « cylindres élémentaires » ; il apparaît ainsi nécessairement, à côté de régions à colle très expansée, des parties présentant une colle peu expansée donc ayant de bonnes propriétés mécaniques.

On appelle surface à « l'état brut » une surface telle qu'elle se trouve lorsque les planches proviennent du premier sciage. Mais, en plus des irrégularités locales provenant de l'attaque du bois par les dents de la scie, l'invention permet d'utiliser des planches dont la forme générale n'est pas tout à fait plane. Cette possibilité provient de l'adaptation que confère l'expansion de la colle car les taux moyens d'expansion utilisables sont compris sensiblement entre 30 et 100 %. Ce taux d'expansion variable sera par ailleurs adaptable, toutes choses égales par ailleurs, aux propriétés du bois à coller et au grammage de colle nécessaire pour assurer un collage convenable.

Par colle expansible, utilisable selon l'invention, il faut entendre n'importe quelle colle à bois dans laquelle ont été inclus un agent porogène et un durcisseur.

Comme élément de base (colle à bois) de cette colle expansible, on peut citer les colles appartenant aux familles suivantes :
— mélamine formol
— phénol formol (le cas échéant, ces colles peuvent être utilisées sans durcisseur)
— résorcine formol
— résorcine phénol formol
— urée formol
— urée mélamine formol
— émulsion vinylique avec durcisseur

Comme agent porogène que l'on doit inclure dans ladite colle à bois, on peut choisir n'importe quel produit qui, sous l'effet de la chaleur, se volatilisera ou se décomposera pour former des produits gazeux ; bien évidemment il convient que l'agent porogène choisi soit soluble ou finement dispersible et compatible avec la colle utilisée. Les agents porogènes les plus courants sont les dérivés fluorés d'hydrocarbures tels que le méthane ou l'éthane ; on peut utiliser des produits chimiques purs ou des mélanges (notamment des mélanges donnant naissance à des azéotropes) de ces produits. Par un choix convenable du ou des agents porogènes, on pourra déterminer la température à laquelle l'expansion de la colle sera réalisée.

Comme agent porogène utilisable, on citera, par exemple :

— le trichlorofluorométhane
— le trichlorotrifluoroéthane
— le tétrachlorodifluoroéthane.

La quantité d'agent porogène à utiliser dépendra du degré d'expansion visé et également de la colle à bois choisie. En règle générale et pour obtenir de bons résultats, il convient d'en employer entre environ 4 et environ 12 parties en poids par rapport à 100 parties en poids de la colle (par colle on entend le produit polymère sec présent dans le liquide du collage).

La colle selon l'invention contiendra également un agent durcisseur. C'est un produit connu qui provoquera la prise en masse et le durcissement (généralement par réticulation) de la colle.

Il convient bien évidemment de choisir l'agent porogène d'une part, et l'agent durcisseur d'autre part, qui doivent être adaptés l'un à l'autre car il convient que leur action (moussage par vaporisation et durcissement de la colle par réticulation) se déroule concurremment dans les meilleures conditions. L'homme de l'art saura choisir convenablement ces deux types de produits en fonction l'un de l'autre.

La colle expansible utilisable dans l'invention pourra comporter d'autres additifs parmi lesquels deux peuvent jouer un rôle important pour la réussite du procédé. Ces deux additifs sont : un agent gélifiant et un agent mouillant. L'agent gélifiant, lorsqu'il est correctement choisi, peut partiellement remplir la fonction de mouillant.

L'addition d'au moins un agent gélifiant au mélange qui comportera de la colle et un agent porogène a pour rôle de régulariser l'expansion de la colle grâce à la gélification du mélange. On utilisera par exemple comme agents gélifiants soit des dérivés cellulosiques (dérivés de l'hydroxyéthyl-cellulose employés à raison de 3 à 10 parties en poids environ par rapport à la colle) soit des alcools polyvinyliques (employés avantageusement à raison de 0,5 à 2 parties en poids par rapport à la colle).

L'addition d'agent mouillant a pour effet d'améliorer les contacts entre le mélange collant et la surface du bois ; grâce à cet agent la force d'accrochage de la colle sur le bois est nettement améliorée ; la quantité d'agent mouillant utilisable est avantageusement de l'ordre de 1 à 10 parties en poids par rapport à 100 parties en poids de la colle. Comme agent mouillant, on peut utiliser, par exemple, un alcool primaire, un alcool secondaire ou un glycol. Les alcools lourds (alcool benzylique ou furfurylique) sont des produits qui présentent à la fois des propriétés d'agent mouillant et des propriétés plastifiantes. On peut, évidemment, utiliser des mélanges de ces alcools.

Les colles étant souvent commercialisées sous forme de solution du produit polymère collant proprement dit dans un milieu aqueux renfermant souvent un alcool, la quantité d'alcool présente devra être prise en considération lorsqu'on calculera la quantité d'agent mouillant dans la « colle ».

Bien évidemment, les colles expansibles utilisables peuvent également comporter d'autres additifs connus parmi lesquels on peut mentionner les charges (inertes ou structurelles), les stabilisants.

La préparation de la colle expansible sera faite en mélangeant intimement les divers ingrédients du mélange.

On opérera de préférence en admettant successivement dans un malaxeur connu :

— la colle de base
— la charge gélifiante
— l'agent porogène
— l'agent mouillant (le cas échéant)

puis, éventuellement, les autres additifs (par exemple le durcisseur) prévus. Le malaxage s'effectuera de façon à obtenir un mélange homogène sans, bien évidemment, provoquer l'expansion de la colle. Cette dernière condition nécessitera parfois que le malaxeur soit refroidi et que la vitesse du malaxage soit contrôlée.

Lorsque la colle expansible aura été préparée, elle pourra être appliquée à la surface du bois par tout moyen connu (encolleuse à rouleaux, encolleuse à rideau, encolleuse à extrusion, pistolet, ...).

La quantité de colle à utiliser (grammage de colle au mètre carré de surface à encoller) est, comme on l'a vu, très variable. Cette quantité va dépendre du bois et de la « qualité » des surfaces à coller. On a constaté qu'il était possible, pour des planches à surface brute de sciage, mais ne présentant que peu de « courbure » générale, de coller en utilisant la même quantité de colle expansible, au mètre carré, que celle qui est recommandée pour le collage de ces mêmes planches après les avoir rabotées ; il en sera de même dans le collage des placages. Cependant le technicien comprendra qu'en pouvant contrôler le taux d'expansion de la colle expansible entre environ 30 et 100 %, on dispose d'un paramètre supplémentaire important permettant la réalisation aux meilleures conditions économiques d'un collage satisfaisant.

Il est clair que l'épaisseur moyenne du joint de colle et le grammage de ladite colle constituent d'autres paramètres permettant de réaliser des liaisons collantes présentant des propriétés convenables. Mais ces paramètres sont connus des techniciens et pourront être utilisés au mieux par les spécialistes.

Lorsque la colle expansible aura été déposée sur la surface des éléments bois, on réalisera l'assemblage et le pressage des bois selon les procédés et avec les appareils connus et utilisés pour le collage traditionnel.

Puis on procédera à une élévation contrôlée de la température du plan de collage de façon à réaliser le moussage de la colle. Cette opération peut s'effectuer immédiatement après le pressage ou dans un certain délai après ce pressage (délai connu pendant lequel la colle expansible conserve une fluidité suffisante pour pouvoir encore être expansée). Pour réaliser cette élévation de la température du plan de collage, on pourra employer tout moyen connu tel que :

— effet de conduction thermique
— effet de convexion
— chauffages haute fréquence et hyperfréquence
— réaction exothermique déclenchée.

Lorsque l'expansion de la colle aura été réalisée, le chauffage pourra être poursuivi ou arrêté selon la température optimale à laquelle la prise en masse de la colle devra avoir lieu.

L'exemple non limitatif ci-après illustre l'invention.

On veut réaliser le collage d'éléments de charpentes lamellées collées à partir de planches blanchies en épicéa (de façon que localement l'interstice ne dépasse pas 1 à 1,5 mm), à l'aide d'une colle à base de résorcine.

On utilise comme colle de départ 100 g de résorcine phénol formol contenant 60 g de matière sèche. On ajoute à cette colle 5 g de trichlorofluorométhane, 2 g d'alcool méthylique, 2 g d'hydroxyéthylcellulose et 20 g de durcisseur.

A la place de l'ensemble constitué par les 2 g d'alcool méthylique et les 2 g d'hydroxyéthylcellulose, on peut avantageusement utiliser 0,5 g d'alcool polyvinylique.

On répand sur la surface à coller la colle expansible ainsi préparée à raison d'environ 550 g au mètre carré.

On presse ensemble les planches à coller et on porte l'ensemble à une température (à cœur du joint de colle expansible) de 25 à 30 °C. La colle remplit tout l'espace entre les planches grâce à une expansion qui localement ne dépasse pas 100 % et peut dans les zones de joints minces être faible.

Le chauffage est poursuivi à la même température de façon à assurer rapidement une prise totale de la colle.

Il n'est bien évidemment pas possible d'obtenir un collage satisfaisant des planches quelles que soient les déformations locales ou globales des surfaces à coller l'une par rapport à l'autre. Le technicien devra donc définir pour un bois donné, une colle donnée et un grammage de mélange collant quelles sont les déformations respectives des surfaces qui sont admissibles. Dans le cas de planches en épicéa et d'une colle résorcine appliqués à raison d'un grammage de 550 g/m² de mélange collant, le profil des surfaces de planches admissible est celui pour lequel l'interstice entre deux planches dans une section perpendiculaire au fil du bois répond à la condition suivante :

$$J' \geq 12,5$$

J' étant défini par :

$$\sum_i \text{li}/\sqrt{\text{ei}}$$

dans laquelle li est le pourcentage de largeur de joint d'une épaisseur d'une classe i donnée et ei est l'épaisseur localisée du joint en millimètres.

Il s'agit, bien entendu, d'une formule approchée, utile pour le technicien.

**Revendications**

1. Procédé pour le collage, entre elles, de planches de bois à surface brute de sciage ou blanchie, de placages tranchés ou déroulés ; caractérisé en ce que l'on enduit au moins une des surfaces à mettre en contact à l'aide d'une colle polymère expansible contenant
— au moins un durcisseur
— et au moins un agent porogène volatil,
que l'on amène les surfaces en regard en contact avec application éventuelle d'une pression et que l'on chauffe ensuite l'ensemble de façon à provoquer une élévation contrôlée de la température et l'expansion de la colle polymère par volatilisation de l'agent porogène, ladite expansion étant réalisée jusqu'à un taux d'expansion de 30 à 100 %.

2. Procédé selon la revendication 1, caractérisé en ce que la colle expansible comporte une colle à bois connue de type polymère et de 4 à 12 parties en poids, par rapport à 100 parties en poids de la matière sèche de ladite colle, d'au moins un agent porogène.

3. Procédé selon l'une des revendications 1 et 2, caractérisé en ce que la colle expansible comporte également de 0,5 à 10 parties en poids, par rapport à 100 parties en poids de la matière sèche de ladite colle, d'au moins un agent gélifiant suivant la nature de celui-ci et la fluidité de la résine de base.

4. Procédé selon l'une des revendications 1, 2 et 3, caractérisé en ce que la colle expansible comporte également de 1 à 10 parties en poids, par rapport à 100 parties en poids de la matière sèche de ladite colle, d'au moins un agent mouillant, dans le cas où l'agent gélifiant n'en tiendrait pas lieu.

**Claims**

1. Process for bonding together wood boards of sawn or bleached rough surface, sliced or unrolled veneer, characterized in that at least one of the surfaces to be placed in contact, is coated with an expansible polymer adhesive containing
— at least a hardening agent
— and at least a volatile foaming agent,
in that the opposite surfaces are put in contact by possibly applying pressure, and in that the assembly is heated so as to cause a controlled increase in temperature and expansion of the polymer adhesive by volatilization of the expanding agent, said expansion being carried out until an expansion rate of 30 to 100 % is obtained.

2. Process according to claim 1, characterized in that the expansible adhesive comprises a known wood adhesive of the polymer type and with 4 to 12 parts by weight, with respect to 100 parts by weight of the dry material of said adhesive, of at least one foaming agent.

3. Process according to claims 1 and 2, characterized in that the expansible adhesive also comprises from 0.5 to 10 parts by weight, with respect to 100 parts by weight of the dry material of the adhesive, at least a gelling agent according to the nature of the latter and the fluidity of the basic resin.

4. Process according to any one of claims 1, 2 and 3, characterized in that the expansible adhesive also comprises from 1 to 10 parts by weight of the dry material of the adhesive, at least a wetting agent, in the case the gelling agent would not act as a wetting agent.

**Ansprüche**

1. Verfahren zum Zusammenkleben von Holzbrettern mit unbearbeiteter gesägter oder geschälter Oberfläche, von geschnittenen oder geschälten Furnieren, dadurch gekennzeichnet, daß zumindest eine der in Kontakt zu bringenden Oberflächen mit einem expandierbaren Polymerisatklebstoff überzogen wird, welcher
— zumindest einen Härter
— und zumindest ein flüchtiges Treibmittel enthält, daß man die zueinanderschauenden Flächen, gegebenenfalls unter Anwendung von Druck, in Kontakt bringt, und daß man danach die Gesamtheit derart erhitzt, daß eine kontrollierte Erhöhung der Temperatur und die Expansion des Polymerisatklebstoffs durch Verflüchtigung des Treibmittels bewirkt wird, wobei die Expansion bis zu einer Expansionsrate von 30 bis 100 % ausgeführt wird.

2. Verfahren nach Anspruch 1, dadurch gekennzeichnet, daß der expandierbare Klebstoff einen bekannten Holzkleber des Polymerisattyps und 4 bis 12 Gewichtsteile, bezogen auf 100 Gewichtsteile Trockenmaterial des Klebstoffs, von zumindest einem Treibmittel umfaßt.

3. Verfahren nach einem der Ansprüche 1 und 2, dadurch gekennzeichnet, daß der expandierbare Klebstoff weiters 0,5 bis 10 Gewichtsteile, bezogen auf 100 Gewichtsteile Trockenmaterial des Klebstoffs, von zumindest einem Geliermittel, je nach Beschaffenheit desselben und der Fluidität des Basisharzes, umfaßt.

4. Verfahren nach einem der Ansprüche 1, 2 und 3, dadurch gekennzeichnet, daß der expandierbare Klebstoff weiters 1 bis 10 Gewichtsteile, bezogen auf 100 Gewichtsteile Trockenmaterial des Klebstoffs, von zumindest einem Emulgierungsmittel für den Fall, daß das Geliermittel dieses nicht ersetzt, umfaßt.